(19) **Europäisches Patentamt**

**European Patent Office**

**Office européen des brevets**

(11) Veröffentlichungsnummer: **0 249 697**
**B1**

(12) **EUROPÄISCHE PATENTSCHRIFT**

(45) Veröffentlichungstag der Patentschrift:
**25.10.89**

(21) Anmeldenummer: **87104959.9**

(22) Anmeldetag: **03.04.87**

(51) Int. Cl.⁴: **B60T 15/22**

(54) Bremsdrucksteuerventil, insbesondere Anhängersteuerventil.

(30) Priorität: **14.06.86 DE 3620121**

(43) Veröffentlichungstag der Anmeldung:
**23.12.87 Patentblatt 87/52**

(45) Bekanntmachung des Hinweises auf die Patenterteilung:
**25.10.89 Patentblatt 89/43**

(84) Benannte Vertragsstaaten:
**DE ES FR GB SE**

(56) Entgegenhaltungen:
**DE-A- 3 210 027**

(73) Patentinhaber: **WABCO Westinghouse Fahrzeugbremsen GmbH, Am Lindener Hafen 21 Postfach 91 12 80, D-3000 Hannover 91(DE)**

(72) Erfinder: **Schulz, Hans-Joachim, Gilborn 16, D-3002 Wedemark(DE)**

(74) Vertreter: **Schrödter, Manfred, WABCO Westinghouse Fahrzeugbremsen GmbH Am Lindener Hafen 21 Postfach 91 12 80, D-3000 Hannover 91(DE)**

## Beschreibung

Bremsdrucksteuerventil, insbesondere Anhängersteuerventil, zum Steuern des Bremsdruckes für ein von einem Zugwagen gezogenes Anhängerfahrzeug mit einer Anhängerbremseinrichtung, gemäß dem Oberbegriff des Patentanspruchs 1.

Ein solches Bremsdrucksteuerventil bzw. Anhängersteuerventil ist durch die DE-A1 3 210 027 vorbekannt. Mit dem vorbekannten Anhängersteuerventil wird erreicht, daß bei einem Bremsvorgang, der durch eine Betätigung des Bremsventils des Zugfahrzeuges ausgelöst wird, in der Bremseinrichtung des Anhängerfahrzeuges ein Bremsdruckaufbau erfolgt, der dem Bremsdruckaufbau des Zugfahrzeuges voreilt. Dadurch wird bei einem Bremsvorgang das Zugfahrzeug und das Anhängerfahrzeug in gestrecktem Zustand gehalten.

Bei Betätigung des Bremsventils des Zugwagens wird ein im Anhängersteuerventil wirkender Relaiskolben mit einem Steuerdruck beaufschlagt. Durch einen daraufhin erfolgenden Hub des Relaiskolbens wird ein durch den Relaiskolben betätigbares Einlaßventil geöffnet. Hierdurch wird die Bremseinrichtung des Anhängerfahrzeuges mit der Druckmittelquelle verbunden. Das Anhängersteuerventil steuert dadurch einen Druck aus, der einen Druckaufbau in der Bremseinrichtung des Anhängerfahrzeuges bewirkt.

Ein dem Zugfahrzeug voreilender Druckaufbau in der Bremseinrichtung des Anhängerfahrzeuges wird dadurch bewirkt, daß bei Beginn des Bremsvorganges zunächst die größte, dem Steuerdruck zugewandte Wirkfläche des Relaiskolbens mit dem Steuerdruck beaufschlagt wird, so daß ein dem eigentlichen Bremsvorgang voreilender Druckaufbau des ausgesteuerten Druckes des Anhängersteuerventils erfolgt.

Im weiteren Verlauf des Bremsvorganges wird durch einen weiteren Anstieg des auf den Relaiskolben wirkenden Steuerdruckes ein in dem Relaiskolben angeordnetes Einlaßventil geöffnet, das eine oberhalb des Relaiskolbens befindliche Steuerkammer mit einer Steuerkammer verbindet, die unterhalb des Relaiskolbens angeordnet ist. Die unterhalb des Relaiskolbens angeordnete Steuerkammer wird durch eine ringförmige Wirkfläche des Relaiskolbens begrenzt, die der vorerwähnten größten Wirkfläche des Relaiskolbens entgegenwirkt.

Es erfolgt eine Druckanpassung zwischen der Ober- und Unterseite des Relaiskolbens, woran auch der auf den Relaiskolben wirkende ausgesteuerte Druck des Anhängersteuerventils beteiligt ist. Hierdurch wird auch das während der Vorsteuerphase bestehende Verhältnis des Steuerdruckes zum ausgesteuerten Druck des Anhängersteuerventils verändert, d.h. die Phase des Voreilens ist beendet und der nun erforderliche höhere Steuerdruck entspricht dem für die eigentliche Bremsphase des Anhängerfahrzeuges benötigten Steuerdruck.

Der in der Vorsteuerphase erzeugte ausgesteuerte Druck des Anhängersteuerventils ist regelbar.

Das in dem Relaiskolben angeordnete Einlaßventil, bestehend aus einem Ventilsitz und einem Ventilteller, ist in einem Ventilkörper angeordnet, der im Relaiskolben in seiner Längsrichtung verschiebbar ist. Der Ventilkörper ist durch eine Feder auf dem Relaiskolben abgestützt. Ein in dem Relaiskolben angeordneter Ventilstößel ragt dem Ventilteller des Einlaßventils entgegen, derart, daß bei einer unter der Einwirkung des Steuerdruckes erfolgten Verschiebung des Ventilkörpers im Relaiskolben der Ventilstößel den Ventilteller von seinem Ventilsitz abhebt. Hierdurch wird die beschriebene Verbindung der beiden, dem Relaiskolben zugeordneten Steuerkammern untereinander hergestellt.

Der Abstand des Ventilstößels zum Ventilteller ist einstellbar, d.h. der Abstand der Stirnseite des Ventilstößels zum Ventilteller kann variiert werden, indem der Ventilstößel, der mit dem Relaiskolben über ein Gewinde verbunden ist, mehr oder weniger tief in den Relaiskolben hineingeschraubt wird.

Durch den bei einem Bremsvorgang in das Anhängersteuerventil eingeleiteten Steuerdruck durchfährt der Ventilkörper gegen die Kraft der erwähnten Feder im Relaiskolben einen Hub, bevor der Ventilteller des Einlaßventils durch den Ventilstößel von seinem Sitz abgehoben und dadurch das Einlaßventil geöffnet wird.

Ist z.B. der Ventilstößel so eingestellt, daß der Hub bis zum Öffnen des Einlaßventils nur gering ist, dann ist auch die zu überwindende Federkaft gering. Dementsprechend wird schon bei einem relativ niedrigen Steuerdruck die Vorsteuerphase beendet. Dies bedeutet, daß auch der voreilende, ausgesteuerte Druck des Anhängersteuerventils entsprechend gering ist. Umgekehrt ist bei einem relativ großen Hub des Ventilkörpers bis zum Öffnen des Einlaßventils der voreilende ausgesteuerte Druck entsprechend höher.

Bei dem eingangs erwähnten Anhängersteuerventil ist der Einstellhub des Ventilstößels in Richtung auf das Einlaßventil begrenzt. Die Begrenzung ist durch einen dem Relaiskolben zugeordneten Anschlag gegeben, welcher verhindert, daß der Ventilstößel über einen vorgegebenen Einstellhub hinaus in den Relaiskolben hineingeschraubt werden kann. Durch diese Begrenzung ist der minimale, voreilende Aussteuerdruck des Anhängersteuerventils festgelegt.

Die Justierung des Aussteuerdruckes wird in der Regel unter Last vorgenommen. Hierbei ist der Steuereinlaß mit einem Steuerdruckgeber und der Druckeinlaß mit einer Druckmittelquelle verbunden. Der auszusteuernde Druck ist mittels eines Druckmeßgerätes, das an den Druckauslaß angeschlossen ist, prüfbar. Eine solche Justierung erfolgt werksseitig auf einem Prüfstand. Sie kann jedoch auch am Fahrzeug unter prüfstandähnlichen Bedingungen vorgenommen bzw. nachvollzogen werden. Letzteres ist erforderlich, wenn z.B. der werksseitig vorjustierte, voreilende Bremsdruck an das Bremskraftverhalten des Anhängerfahrzeuges anzupassen ist.

Wird z.B. bei einer kundenseitigen Nachjustierung am Fahrzeug ein größerer voreilender Aussteuerdruck angestrebt, so kann bei dem eingangs erwähnten Anhängersteuerventil der Ventilstößel leicht in eine Position gebracht werden, d.h. soweit aus dem Relaiskolben herausgeschraubt werden, daß das im Relaiskolben angeordnete Einlaßventil nicht geöffnet wird. Dies hätte ein ungewolltes, steiles Ansteigen des ausgesteuerten Druckes am Anhängersteuerventil zur Folge. Im Fahrbetrieb würde sich dadurch eine unerwünschte Überbremsung des Anhängerfahrzeuges ergeben, was sich jedoch bei mäßigen Bremsungen, bei relativ günstigen Fahrbahneigenschaften nicht unbedingt sofort bemerkbar machen muß. In einer kritischen Bremssituation, z.B. bei glatter Fahrbahn, kann dies jedoch zu einem abrupten Blockieren der gebremsten Räder und damit zu einem Ausscheren des Anhängerfahrzeuges führen.

Der Erfindung liegt daher die Aufgabe zugrunde, ein Anhängersteuerventil der eingangs genannten Art so zu verbessern, daß der voreilende, vom Anhängersteuerventil auszusteuernde Bremsdruck für das Anhängerfahrzeug auf eine vorgegebene maximale Druckhöhe begrenzbar ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß bei einer Justierung des voreilenden, von dem Anhängersteuerventil auszusteuernden Druckes sowohl werksseitig auf einem Prüfstand, als auch am Fahrzeug unter prüfstandähnlichen Bedingungen, eine definierte maximale Druckhöhe als Anfangsdruck für den Regelbeginn zugrundegelegt werden kann. Hierdurch wird verhindert, daß das Anhängersteuerventil in einen Regelzustand gebracht werden kann, der eine extreme Übersteuerung des Anhängers zur Folge hätte.

Als weiterer Vorteil ergibt sich hieraus, daß eine Justierung am Fahrzeug auch unter nicht prüfstandähnlichen Bedingungen, z.B. im drucklosen Zustand des Bremssystems, ohne das Risiko der erwähnten Überbremsung vorgenommen werden kann.

Ein weiterer Vorteil ergibt sich aus der Formgebung des erwähnten Ventilstößels, wodurch in jeder eingestellten Position des Ventilstößels ein gleichbleibender Öffnungshub des die Steuerkammern des Relaiskolbens verbindenden Einlaßventils erreicht wird.

Die Erfindung wird anhand eines Ausführungsbeispieles, das in der Zeichnung dargestellt ist, näher erläutert.

Es zeigen:

Fig. 1 ein Anhängersteuerventil,
Fig. 2 ein Bremsdruckdiagramm.

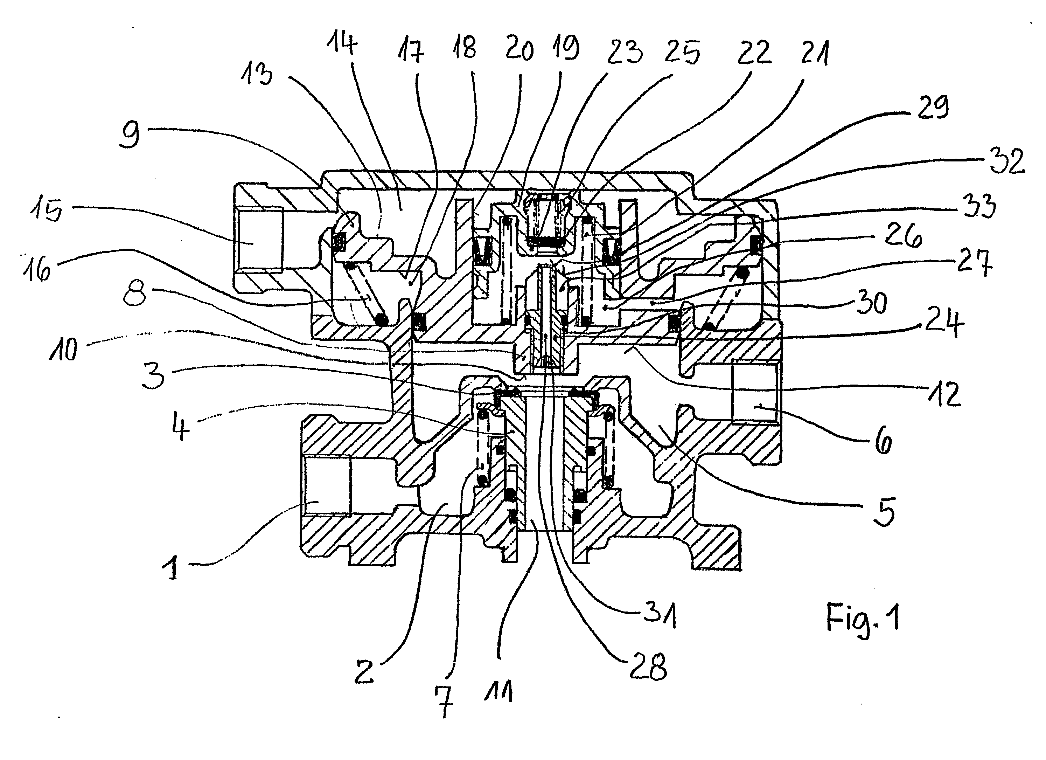

Die Fig. 1 zeigt ein Anhängersteuerventil mit einem kombinierten Einlaß- und Auslaßventil zur Steuerung der Voreilung sowie einen verstellbaren Ventilstößel zur Regelung des voreilenden Druckes.

Ein Druckmitteleinlaß (1) mit einer Druckmittelkammer (2) ist über ein Einlaßventil (3, 4) mit einer Arbeitskammer (5) und einem Druckmittelauslaß (6) verbindbar. Das Einlaßventil besteht aus einem Sitz (3), der sich gegenüber dem Ventilgehäuse in einer definierten Lage befindet, und einem Ventilkörper (4), der durch eine Feder (7) gegen den Sitz (3) gehalten wird. Der Druckmitteleinlaß (1) ist mit einer Druckmittelquelle und der Druckmittelauslaß (6) mit der Bremseinrichtung des Anhängerfahrzeuges verbunden.

Ein Fortsatz (8) eines Relaiskolbens (9) bildet mit seiner Wirkfläche (10) und dem Ventilkörper (4) ein Auslaßventil (10, 4), über das die Arbeitskammer (5) durch einen Auslaß (11) in die Atmosphäre entlüftbar ist. Die Arbeitskammer (5) ist durch eine Wirkfläche (12) des Relaiskolbens (9) begrenzt.

Der Relaiskolben (9) begrenzt mit seiner Wirkfläche (13) eine Steuerkammer (14). Über einen Druckmitteleinlaß (15), der von dem Bremsventil des Zugfahrzeuges ansteuerbar ist, ist die Wirkfläche (13) des Relaiskolbens (9) gegen die Kraft einer Rückstellfeder (16) mit einem Steuerdruck variabler Größe beaufschlagbar. Der Relaiskolben hat eine weitere Wirkfläche (17), die der Wirkfläche (13) gegenüberliegend angeordnet ist und eine Hilfssteuerkammer (18) begrenzt.

Die Steuerkammern (14, 18) sowie die Arbeitskammer (5) sind gegeneinander abgedichtet.

Ein Hilfskolben (19) ist in einer Ausnehmung (20) des Relaiskolbens (9) gleitend und dichtend geführt. Der Hilfskolben (19) ist in seiner Längsrichtung gegen die Kraft eine auf dem Relaiskolben (9) sich abstützenden Rückstellfeder (21) verschiebbar. Ein Ventilglied (22) im Hilfskolben (19) bildet mit einem, dem Hilfskolben (19) zugeordneten Ventilsitz (23) ein Einlaßventil (22, 23) und mit einem, im Relaiskolben (9) angeordneten, als Ventilstößel ausgebildeten Anschlagelementes (24) und seiner Wirkfläche (29) ein Auslaßventil (22, 29). Das Ventilglied (22) wird durch eine im Hilfskolben (19) sich abstützende Rückstellfeder (25) gegen den Ventilsitz (23) gehalten. Das Einlaßventil (22, 23) und das Auslaßventil (22, 29) bilden in Kombination ein Hilfsventil (22, 23; 22, 29).

Die Steuerkammer (14) ist über das Einlaßhilfsventil (22, 23), eine Kammer (26) und einen Durchlaß (27) mit der Hilfssteuerkammer (18) verbindbar. Die Hilfssteuerkammer (18) ist über das Auslaßhilfsventil (22, 29), die Arbeitskammer (5) und den Auslaß (11) mit der Atmosphäre verbindbar. Das als Ventilstößel wirkende Anschlagelement (24) ist als Hohlstößel ausgebildet und hat einen Durchlaß (28), durch den die Hilfssteuerkammer (18) mit der Atmosphäre verbindbar ist.

Das Anschlagelement (24) ist in seiner Längsrichtung im Relaiskolben (9) verstellbar, derart, daß der Abstand zwischen der Wirkfläche (29) des Anschlagelementes (24) und dem Ventilglied (22) variabel ist. Die Verstellung des Anschlagelementes (24) erfolgt mittels eines Werkzeugs, das an einer Ausformung (31) des Anschlagelementes (24) ansetzbar ist. Das Verstellwerkzeug ist durch den Auslaß (11) des Ventilkörpers (4) hindurchführbar.

Das Anschlagelement (24) ist in einer Endstellung, in der der Abstand zwischen der Wirkfläche (29) und dem Ventilglied (22) am größten ist, auf einen Anschlag (30) des Relaiskolbens (9) abgestützt. Der Anschlag (30) zur Begrenzung des Verstellweges des Anschlagelementes (24) ist in derjenigen Bewegungsrichtung vorgesehen, in die das Anschlagelement (24) zur Erhöhung der beim Öffnen des Hilfsventils (22, 23) von der Feder (21) auf den Hilfskolben (19) ausgeübten Kraft verstellt wird. D.h. der Verstellweg des Anschlagelementes (24) ist in Öffnungsrichtung zum Auslaßhilfsventil (22, 29) des im Relaiskolben (9) angeordneten kombinierten Einlaß- und Auslaßhilfsventils (22, 23) und (22, 29) begrenzt. In dieser Endstellung des Anschlagelementes (24) durchfährt der Hilfskolben (19) im Relaiskolben (9) seinen größten Hub bis zum Öffnen des Einlaßhilfsventils (22, 23). Das Einlaßhilfsventil (22, 23) wird geöffnet, indem das Anschlagelement (24) mit seiner Wirkfläche (29) das Ventilglied (22) von dem Ventilsitz (23) abhebt.

Das Anschlagelement (24) hat Stützrippen (33), die mit Stützflächen (32) versehen sind. Der Hilfskolben (19) stützt sich auf die Stützflächen (32) ab, wenn die Wirkfläche (29) das Ventilglied (22) von dem Sitz (23) um einen vorgegebenen Hub des Ventilgliedes (22) abgehoben hat. Hierdurch wird erreicht, daß der Öffnungshub des Einlaßhilfsventils (22, 23) in jeder eingestellten Position des Anschlagelementes (24) gleichbleibend ist. Das Anschlagelement (24) ist in Richtung auf den Hilfskolben (19) mittels des erwähnten Werkzeuges so weit verstellbar, daß das Einlaßhilfsventil (22, 23) geöffnet und das Auslaßhilfsventil (22, 29) geschlossen ist. In dieser Stellung des Anschlagelementes (24) ist die Steuerkammer (14) mit der Hilfssteuerkammer (18) bei Beaufschlagung der Steuerkammer (14) mit einem Druckmittel, ständig verbunden. Die Stützrippen (33) sowie die Stützflächen (32) sind gleichmäßig auf den Umfang des Ventilstößels verteilt und strömungstechnisch günstig geformt.

Die Wirkungsweise des Anhängersteuerventils ist wie folgt:

Bei einem Bremsvorgang wird vom Bremsventil des Zugfahrzeuges ein Steuerdruck in die Steuerkammer (14) eingeleitet und die Wirkfläche (13) des Relaiskolbens (9) mit Druck beaufschlagt. Der Relaiskolben bewegt sich mit seiner Wirkfläche (10) in Richtung auf das kombinierte Einlaß- und Auslaßventil (3, 4) und (10, 4). Zunächst wird das Auslaßventil (10, 4) geschlossen, d.h. die Verbindungen der Arbeitskammer (5) mit der Hilfssteuerkammer (18) durch den Durchlaß (28) des Anschlagelementes (24) und mit der Atmosphäre durch den Auslaß (11) werden gesperrt. Durch einen weiteren Hub des Relaiskolbens (9) wird das Einlaßventil (3, 4) gegen die Kraft der Feder (7) durch einen Hub des Ventilkörpers (4) geöffnet. Über den Druckmitteleinlaß (1) wird eine Druckmittelquelle mit dem Druckmittelauslaß (6) verbunden und die Bremseinrichtung des Anhängerfahrzeuges mit Druck beaufschlagt. Die Öffnung des Einlaßventils (3, 4) bzw. der am Druckauslaß (6) ausgesteuerte Druck in dieser sogenannten Vorsteuerphase wird durch den auf die Wirkfläche (13) wirkenden Steuerdruck und durch die auf die Wirkfläche (12), dem Steuerdruck entgegenwirkenden Druck der Arbeitskammer (5) bestimmt. Der auf diese Weise ausgesteuerte Druck bewirkt einen Druckaufbau in der Bremseinrichtung des Anhänger fahrzeuges, der dem eigentlichen geregelten Bremsdruck vorauseilt.

Bei einem Anstieg des Steuerdruckes in der Steuerkammer (14) wird der Hilfskolben (19) im Relaiskolben (9) in Richtung auf das Anschlagelement (24) bewegt und das Einlaßhilfsventil (22, 23) geöffnet. Hierdurch wird die Steuerkammer (14) über die Kammer (26) und den Durchlaß (27) mit der Hilfssteuerkammer (18) verbunden und die der Wirkfläche (13) entgegenwirkende Wirkfläche (17) mit dem Steuerdruck beaufschlagt. Durch die Beaufschlagung der Wirkfläche (17) wird das während der Vorsteuerphase bestehende Verhältnis des Steuerdruckes zum ausgesteuerten Druck verändert. Die Phase des Voreilens ist dadurch beendet und der nun erforderliche höhere Steuerdruck entspricht dem für die eigentliche Bremsphase des Anhängerfahrzeuges benötigten Steuerdruck.

Anstelle der Druckbeaufschlagung des Hilfskolbens (19) mit dem Druck einer durch das Bremsventil gesteuerten Druckmittelquelle kann der Hilfskolben (19) auch durch den in der Arbeitskammer (5) vorhandenen ausgesteuerten Druck des Bremsdrucksteuerventils beaufschlagt werden. Bei einer solchen Ausführung ist der Relaiskolben (9) oberhalb des Hilfskolbens (19) geschlossen ausgeführt. Eine durch den Relaiskolben (9) und den Hilfskolben (19) gebildete Steuerkammer des Hilfskolbens (19), die gegenüber der Steuerkammer (14) abgedichtet ist, wäre dann über einen im Relaiskolben (9) befindlichen Durchlaß mit der Arbeitskammer (5) verbunden.

Das kombinierte Hilfsventil (22, 23; 22, 29) kann auch in der Hilfssteuerkammer (18) angeordnet sein, derart, daß die Hilfssteuerkammer (18) mit einer Hilfsdruckmittelquelle oder mit der Atmosphäre verbindbar ist.

Das Ventilglied (22) des Einlaßhilfsventils (22, 23) kann auch im Relaiskolben (9) angeordnet sein. Das Anschlagelement (24), das in diesem Fall nicht als Hohlkörper ausgebildet ist, ist dann im Hilfskolben (19) in seiner Längsrichtung verstellbar angeordnet. Der Verstellweg des Anschlagelementes (24) ist dann durch den Anschlag (30) begrenzt, der sich im Hilfskolben (19) befindet. In diesem Fall ist die Hilfssteuerkammer (18) über das Einlaßhilfsventil (22, 23) mit der Arbeitskammer (5) verbindbar. Die Entlüftung der Hilfssteuerkammer (18) erfolgt dann über ein Auslaßhilfsventil der Hilfssteuerkammer (18), über das die Hilfssteuerkammer (18) mit der Atmosphäre verbindbar ist.

Das Hilfsventil (22, 23; 22, 29), der Hilfskolben (19), die Feder (21) und das Anschlagelement (24) können auch zwischen dem Bremsventil und dem Bremsdrucksteuerventil, z.B. in einem eigenständigen Gehäuse angeordnet sein.

Der Hilfskolben (19) kann auch durch eine Membran gebildet sein.

Der Bremsvorgang wird durch die Entlüftung der Steuerkammer (14) beendet. Hierdurch werden der Relaiskolben (9) und der Hilfskolben (19) druckentlastet und durch die Kraft der Rückstellfedern (16) und (21) in ihre Ausgangsstellungen zurückbewegt. Dies bewirkt eine Schließung des Einlaßventils (3, 4) und eine Öffnung des Auslaßventils (10, 4). Das im Relaiskolben (9) befindliche Auslaßhilfsventil (22, 29) wird geöffnet. Die Hilfssteuerkammer (18) und die Arbeitskammer (5) werden dadurch über den Auslaß (11) in die Atmosphäre entlüftet. Die Verbindung der Druckmittelquelle mit der Arbeitskammer (5) ist durch das geschlossene Einlaßventil (3, 4) gesperrt.

Die Höhe des voreilenden Druckes ist durch die beschriebene Verstellmöglichkeit des Anschlagelementes (24) im Relaiskolben (9) bis zu einem vorgegebenen maximalen Vorsteuerdruck regulierbar. Der maximale Vorsteuerdruck ist erreicht, wenn das Anschlagelement (24) den Anschlag (30) im Relaiskolben berührt. Durch den, den Verstellweg des Anschlagelementes (24) begrenzenden Anschlag (30) wird verhindert, daß der Hilfskolben (19) einen maximalen Hub ausführen kann, ohne daß das Einlaßhilfsventil (22, 23) geöffnet wird. Ohne das Öffnen des Einlaßhilfsventils (22, 23) würde bei einem Bremsvorgang die Hilfssteuerkammer (18) wirkungslos bleiben. Dies hätte ein steiles Ansteigen des ausgesteuerten Druckes am Druckmittelausgang (6) und einen unerwünscht hohen Druckaufbau in der Bremseinrichtung des Anhängerfahrzeuges zur Folge.

Die Vorsteuerphase kann bei Bedarf ausgeschaltet werden, wenn das Anschlagelement (24) in Richtung auf den Hilfskolben (19) so weit verstellt wird, daß in jedem Betriebszustand des Anhängersteuerventils das Einlaßhilfsventil (22, 23) geöffnet und das Auslaßhilfsventil (22, 29) geschlossen ist.

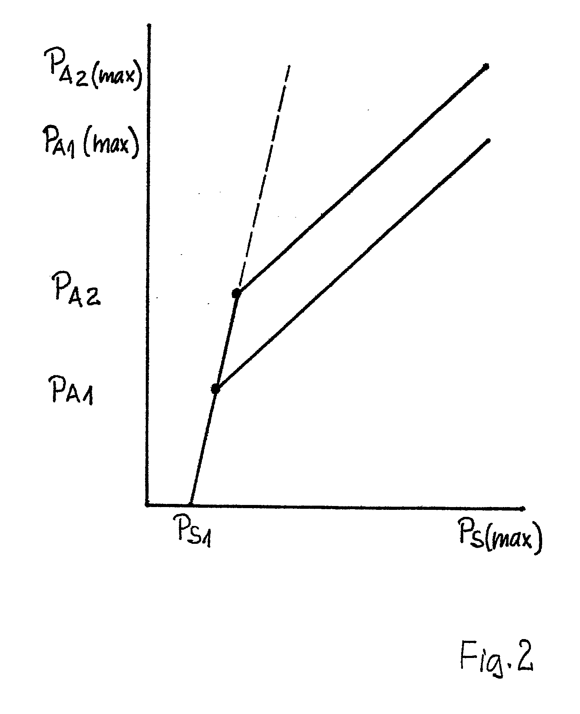

Fig. 2 zeigt das Verhalten des am Druckmittelausgang (6) ausgesteuerten Vorsteuer- und Bremsdruckes in Abhängigkeit vom eingesteuerten Steuerdruck. Der Steuerdruck ist mit $P_S$ und der ausgesteuerte Druck mit $P_A$ bezeichnet.

Ausgehend von einem Anfangssteuerdruck $P_{S1}$ erfolgt ein steiler, voreilender Druckaufbau $P_A$, der mit der Belüftung der Hilfssteuerkammer (18) bei einem Druck $P_{A1}$ beendet ist. Der Druck $P_{A1}$ entspricht einer vorgegebenen Regelstellung des Anschlagelementes (24). Mit steigendem Steuerdruck erfolgt in der eigentlichen Regelphase ein flacherer Anstieg des ausgesteuerten Druckes von $P_{A1}$ bis $P_{A1}$ (max). Der maximale, voreilende Druck $P_{A2}$ wird erreicht, wenn das Anschlagelement (24) eine durch den Anschlag (30) gegebene Endstellung erreicht hat. Der ausgesteuerte Bremsdruck kann dann bis $P_{A2}$ (max.) ansteigen.

Ein über $P_{A2}$ ansteigender Druckaufbau (gestrichelte Linie) würde dem eingangs beschriebenen unerwünschten Regelzustand entsprechen, der innerhalb des gegebenen Einstellbereiches des eingangs erwähnten Anhängersteuerventils gemäß DE-A1 3 210 027 herstellbar ist. In diesem Falle würde $P_{A2}$ (max.) bereits bei einem relativ niedrigen eingesteuerten Steuerdruck erreicht werden.

## Patentansprüche

1. Bremsdrucksteuerventil, insbesondere Anhängersteuerventil, zum Steuern des Bremsdruckes für ein von einem Zugwagen gezogenes Anhängerfahrzeug mit einer Anhängerbremseinrichtung, mit folgenden Merkmalen:

a) es ist ein kombiniertes Ein- und Auslaßventil (3, 4; 10, 4) vorgesehen, das die Bremseinrichtung des Anhängerfahrzeuges mit einer Druckmittelquelle oder mit der Atmosphäre verbindet;

b) das kombinierte Ein- und Auslaßventil (3, 4; 10, 4) ist relaisartig von einem Relaiskolben (9) betätigbar;

c) eine erste Wirkfläche (13) des Relaiskolbens (9) ist mit einem von einem Bremsventil ausgesteuerten Steuerdruck beaufschlagbar;

d) der Relaiskolben (9) ist abgestuft ausgebildet, so daß sich zwei weitere Wirkflächen (12, 17) ergeben, die der ersten Wirkfläche gegenüberliegend angeordnet sind;

e) die eine weitere Wirkfläche (12) ist von dem von dem kombinierten Ein- und Auslaßventil ausgesteuerten Druck beaufschlagt;

f) die andere weitere Wirkfläche (17) ist über ein als kombiniertes Ein- und Auslaßventil (3, 4; 10, 4) ausgebildetes Hilfsventil (22, 23; 22, 29) mit dem Druck einer Hilfsdruckmittelquelle beaufschlagbar;

g) das Hilfsventil ist (22, 23; 22, 29) von einem gegen die Kraft einer Feder (21) bewegbaren Hilfskolben (19) betätigbar;

h) es ist ein in seiner Lage zum Hilfskolben (19) verstellbares Anschlagelement (24) vorgesehen, das zur Festlegung der von der Feder (21) beim Öffnen des Hilfsventils (22, 23; 22, 29) auf den Hilfskolben (19) ausgeübten Kraft dient;

gekennzeichnet durch folgendes Merkmal:

i) es ist ein Anschlag (30) zur Begrenzung des Verstellweges des Anschlagelementes (24) in derjenigen Bewegungsrichtung vorgesehen, in die das Anschlagelement (24) zur Erhöhung der beim Öffnen des Hilfsventils (22, 23) von der Feder (21) auf den Hilfskolben (19) ausgeübten Kraft verstellt wird.

2. Bremsdrucksteuerventil nach Anspruch 1, dadurch gekennzeichnet, daß der Anschlag (30) im Relaiskolben (9) angeordnet ist.

3. Bremsdrucksteuerventil nach Anspruch 1, dadurch gegekennzeichnet, daß der Hilfskolben (19) im Relaiskolben (9) angeordnet und in Richtung seiner Längsachse im Relaiskolben (9) verschieblich ist.

4. Bremsdrucksteuerventil nach Anspruch 1, dadurch gekennzeichnet, daß ein dem Hilfsventil (22, 23) zugeordnetes Ventilglied (22) im Hilfskolben (19) angeordnet ist.

5. Bremsdrucksteuerventil nach Anspruch 1, dadurch gekennzeichnet, daß das verstellbare Anschlagelement (24) im Relaiskolben (9) angeordnet ist.

6. Bremsdrucksteuerventil nach Anspruch 1, dadurch gekennzeichnet, daß das Ventilglied (22) des Hilfsventils (22, 23) im Relaiskolben (9) angeordnet ist.

7. Bremsdrucksteuerventil nach Anspruch 1, dadurch gekennzeichnet, daß das verstellbare Anschlagelement (24) und der den Verstellweg des Anschlagelementes (24) begrenzende Anschlag (30) mit Hilfskolben (19) angeordnet sind.

8. Bremsdrucksteuerventil nach Anspruch 1, dadurch gekennzeichnet, daß das Anschlagelement (24) als Hohlkörper ausgebildet ist und eine Wirkfläche (29) aufweist, die mit dem Ventilglied (22) ein Auslaßhilfsventil (22, 29) bildet, über welches eine durch den Relaiskolben (9) und das Gehäuse des Bremsdrucksteuerventils begrenzte Hilfssteuerkammer (18) durch das Anschlagelement (24) hindurch in die Atmosphäre entlüftbar ist.

9. Bremsdrucksteuerventil nach Anspruch 1, dadurch gekennzeichnet, daß die Hilfssteuerkammer (18) ein Auslaßhilfsventil aufweist, über das die Hilfssteuerkammer (18) in die Atmosphäre entlüftbar ist.

10. Bremsdrucksteuerventil nach Anspruch 1, dadurch gekennzeichnet, daß der Relaiskolben (9) und der Hilfskolben (19) mit dem Druck einer durch das Bremsventil steuerbaren Hilfsdruckmittelquelle beaufschlagbar sind.

11. Bremsdrucksteuerventil nach Anspruch 1, dadurch gekennzeichnet, daß der Relaiskolben (9) mit dem Druck einer durch das Bremsventil steuerbaren Hilfsdruckmittelquelle und der Hilfskolben (19) mit dem ausgesteuerten Druck des Bremsdrucksteuerventils beaufschlagbar sind.

12. Bremsdrucksteuerventil nach wenigstens einem der vorhergehenden Ansprüche, dadurch gekennzeichnet, daß das Anschlagelement (24) mindestens eine Stützfläche (32) aufweist, auf die der Hilfskolben (19) abstützbar ist, derart, daß in beliebiger Stellung des Anschlagelementes (24) relativ zum Anschlag (30) des Relaiskolbens (9) das kombinierte Ein- und Auslaßhilfsventil (22, 23; 22, 29) einen gleichbleibenden Öffnungshub aufweist.

13. Bremsdrucksteuerventil nach wenigstens einem der vorhergehenden Ansprüche, dadurch gekennzeichnet, daß der Hilfskolben (19) durch eine Membran gebildet ist.

14. Bremsdrucksteuerventil nach wenigstens einem der vorhergehenden Ansprüche, dadurch gekennzeichnet, daß das Hilfsventil (22, 23; 22, 29), der Hilfskolben (19), die Feder (21) und das Anschlagelement (24) zwischen dem Bremsventil und dem Bremsdrucksteuerventil, z.B. ein einem eigenständigen Gehäuse angeordnet sind.

**Claims**

1. A brake pressure control valve, in particular a trailer control valve, for controlling the brake pressure for a trailer vehicle having a trailer braking device and pulled by a towing vehicle, having the following features:

a) there is provided a combined inlet an outlet valve (3, 4; 10, 4) which connects the braking device of the trailer vehicle to a pressure medium source or to the atmosphere;

b) the combined inlet and outlet valve (3, 4; 10, 4) can be actuated in the manner of a relay by a relay piston (9);

c) a first effective surface (13) of the relay piston (9) can bi pressurized by a control pressure emitted by a brake valve;

d) the relay piston (9) is of graduated construction so that two further effective surfaces (12, 17) are provided which are arranged lying opposite the first effective surface;

e) the one further effective surface (12) is pressurized by the pressure emitted by the combined inlet and outlet valve (3, 4; 10, 4);

f) the other further effective surface (19) can be pressurized by way of an auxiliary valve (22, 23; 22, 29) constructed as a combined inlet and outlet valve with the pressure of an auxiliary pressure medium source;

g) the auxiliary valve (22, 23; 22, 29) can be actuated by an auxiliary piston (19) movable against the force of a spring (21);

h) there is provided a stop element (24) which is adjustable in its position with respect to the auxiliary piston (19), which stop element serves to determine the force exerted by the spring (21) on the auxiliary piston (19) as the auxiliary valve (22, 23; 22, 29) opens;

characterized by the following feature:

i) there is provided a stop (30) to limit the adjustment path of the stop element (24) in that direction of movement in which the stop element (24) is adjusted to increase the force exerted by the spring (21) on the auxiliary piston (19) as the auxiliary valve (22, 23) opens.

2. A brake pressure control valve according to claim 1, characterized in that the stop (30) is arranged in the relay piston (9).

3. A brake pressure control valve according to claim 1, characterized in that the auxiliary piston (19) is arranged in the relay piston (9) and is displaceable in the direction of its longitudinal axis in the relay piston (9).

4. A brake pressure control valve according to claim 1, characterized in that a valve member (22) associated with the auxiliary valve (22, 23) is arranged in the auxiliary piston (19).

5. A brake pressure control valve according to claim 1, characterized in that the adjustable stop element (24) is arranged in the relay piston (9).

6. A brake pressure control valve according to claim 1, characterized in that the valve member (22) of the auxiliary valve (22, 23) is arranged in the relay piston (9).

7. A brake pressure control valve according to claim 1, characterized in that the adjustable stop element (24) and the stop (30) limiting the adjustment path of the stop element (24) are arranged in the auxiliary piston (19).

8. A brake pressure control valve according to claim 1, characterized in that the stop element (24) is constructed as a hollow body and has an effective surface (29) which, together with the valve member (22) forms an auxiliary control chamber (18) defined by the relay piston (9) and the housing of the brake pressure control valve can be vented right through the stop element (24) to the atmosphere.

9. A brake pressure control valve according to claim 1, characterized in that the auxiliary control chamber (18) has an outlet auxiliary valve by means of which the auxiliary control chamber (18) can be vented to the atmosphere.

10. A brake pressure control valve according to claim 1, characterized in that the relay piston (9) and the auxiliary piston (19) can be pressurized by the pressure of an auxiliary pressure medium source controllable by the brake valve.

11. A brake pressure control valve according to claim 1, characterized in that the relay piston (9) can be pressurized by the pressure of an auxiliary pressure medium source controllable by the brake valve and the auxiliary piston (19) can be pressurized by the emitted pressure of the brake pressure control valve.

12. A brake pressure control valve according to at least one of the preceding claims, characterized in that the stop element (24) has at least one supporting face (32) on which the auxiliary piston (19) is supportable, such that in any position of the stop element (24) relative to the stop (30) of the relay piston (9) the combined inlet and outlet valve (22, 23; 22, 29) has a constant opening stroke.

13. A brake pressure control valve according to at least one of the preceding claims, characterized in that the auxiliary piston (19) is formed by a diaphragm.

14. A brake pressure control valve according to at least one of the preceding claims, characterized in that the auxiliary valve (22, 23; 22, 29), the auxiliary piston (19), the spring (21) and the stop element (24) are arranged between the brake valve and the brake pressure control valve, for example in an independent housing.

## Revendications

1. Valve de commande de pression de freinage, notamment valve de commande pour remorque, pour commander la pression de freinage d'un véhicule-remorque tracté par un véhicule tracteur et doté d'un dispositif de freinage de remorque, présentant les caractéristiques suivantes:

a) une valve combinée d'entrée et sortie (3, 4; 10, 4) est prévue qui relie le dispositif de freinage du véhicule-remorque à une source de fluide de pression ou à l'atmosphère;

b) la valve combinée d'entrée et sortie (3, 4; 10, 4) est actionnable à la manière d'un relais, par un piston-relais (9);

c) une première surface active (13) du piston-relais (9) peut être sollicitée par une pression de commande donnée par l'action de commande d'une valve de freinage;

d) le piston-relais (9) est étagé de manière qu'il en résulte deux autres surfaces actives (12; 17) qui sont agencées à l'opposé de la première surface active;

e) la première autre surface active (12) est sollicitée par la pression donnée par l'action de commande de la valve combinée d'entrée et sortie (3, 4; 10, 4);

f) la deuxième autre surface active (17) peut être sollicitée par la pression d'une source de fluide de pression auxiliaire via une valve auxiliary (22, 23; 22, 29) constituée en tant que valve combinée d'entrée et sortie;

g) la valve auxiliaire (22, 23; 22, 29) est actionnable par un piston auxiliary (19) mobile contre la force d'un ressort (21);

h) il est prévu un élément-butée (24) dont la position est réglable par rapport au piston auxiliaire (19) et qui sert à déterminer la force que le ressort (21) exerce sur le piston auxiliaire (19) lors de l'ouverture de la valve auxiliaire (22, 23; 22, 29); caractérisée par la caractéristique suivante:

i) une butée (30) est prévue pour limiter le trajet de déplacement de l'élément-butée (24) dans la direction de mouvement dans laquelle l'élément-butée (24) est déplacé pour accroître la force que le ressort (21) exerce sur le piston auxiliaire (19) lors de l'ouverture de la valve auxiliaire (22, 23).

2. Valve de commande de pression de freinage selon revendication 1, caractérisée par le fait que la butée (30) est agencée dans le piston-relais (9).

3. Valve de commande de pression de freinage selon revendication 1, caractérisée par le fait que le piston auxiliaire (19) est agencé dans le piston-relais (9) et est mobile en translation dans la direction de son axe longitudinal, dans piston-relais (9).

4. Valve de commande de pression de freinage selon revendication 1, caractérisée, par le fait qu'un fait qu'un organe de soupape (22) affecté à la valve auxiliaire (22, 23) est agencé dans le piston auxiliaire (19).

5. Valve de commande de pression de freinage selon revendication 1, caractérisée par le fait que l'élément-butée (24) à position réglable est agencé dans le piston-relais (9).

6. Valve de commande de pression de freinage selon revendication 1, caractérisée par le fait que l'organe de soupape (22) de la valve auxiliaire (22, 23) est agencé dans le piston-relais (9).

7. Valve de commande de pression de freinage selon revendication 1, caractérisée par le fait que l'élément-butée à position réglable (24) et la butée (30) limitant le trajet de déplacement de l'élément-butée (24) sont avec le piston auxiliaire (19).

8. Valve de commande de pression de freinage selon revendication 1, caractérisée par le fait que l'élément-butée (24) est réalisé sous la forme d'un corps creux et présente une surface active (29) qui, avec l'organe de soupape (22), forme une valve auxiliaire de sortie (22, 29) par laquelle une chambre de commande auxiliaire (18), bordée par le piston-relais (9) et par l'enceinte de la valve de commande de pression de freinage, peut être mise à l'atmosphère via l'élément-butée (24).

9. Valve de commande de pression de freinage selon revendication 1, caractérisée par le fait que la chambre de commande auxiliaire (18) présente une valve auxiliaire de sortie par laquelle la chambre de commande auxiliaire (18) peut être mise à l'atmosphère.

10. Valve de commande de pression de freinage selon revendication 1, caractérisée par le fait que le piston-relais (9) et le auxiliaire (19) peuvent être soumis à la pression d'une source de fluide de pression auxiliaire pouvant être commandée par la valve de freinage.

11. Valve de commande de pression de freinage selon revendication 1, caractérisée par le fait que le piston-relais (9) peut être sollicité par la pression d'une source de fluide de pression auxiliaire pouvant être commandée par la valve de freinage, et le piston auxiliaire (19) peut être sollicité par la pression donnée par l'action de commande de la valve de commande de pression de freinage.

12. Valve de commande de pression de freinage selon au moins l'une des revendications précédentes, caractérisée par le fait que l'élément-butée (24) présente au moins une surface d'appui (32) sur laquelle le piston auxiliaire (19) peut prendre appui de manière que, lorsque l'élément-butée (24) est à une position quelconque par rapport à la butée (30) du piston-relais (9), la valve d'entrée et sortie combinée (22, 23; 22, 29) présente une course d'ouverture constante.

13. Valve de commande de pression de freinage selon au moins l'une des revendications précédentes, caractérisée par le fait que le piston auxiliaire (19) est constitué par une membrane.

14. Valve de commande de pression de freinage selon au moins l'une des revendications précédentes, caractérisée par le fait que la valve auxiliaire (22, 23; 22, 29), le piston auxiliaire (19), le ressort (21) et l'élément-butée (24) sont agencés entre la valve de freinage et la valve de commande de pression de freinage, par exemple dans une enceinte particulière.

Fig. 1

EP 0 249 697 B1

Fig. 2